# EUROPÄISCHE PATENTSCHRIFT

(11) **EP 0 437 641 B1**
(45) Veröffentlichungstag und Bekanntmachung des Hinweises auf die Patenterteilung: **01.09.1993**
(21) Anmeldenummer: 90100665.0
(22) Anmeldetag: 13.01.1990
(51) Int. Cl.: B62D 1/06, H05B 3/58

(54) **Beheizbares Lenkrad und Verfahren zu seiner Herstellung**
Heated steering wheel and its process of manufacture
Volant chauffant et son procédé de fabrication

(43) Veröffentlichungstag der Anmeldung: 24.07.1991
(73) Patentinhaber: Petri AG, D-63704 Aschaffenburg (DE)
(72) Erfinder: Bonn, Helmut, D-8751 Haibach (DE); Zeller, Gregor, D-8750 Aschaffenburg (DE)
(74) Vertreter: Eyer, Eckhardt Philipp, Dipl.-Ing.

(56) Entgegenhaltungen:
- DE-A- 2 533 936
- DE-A- 3 339 500
- DE-U- 8 705 717

## Beschreibung

Die Erfindung geht aus von einem Lenkrad gemäß dem Oberbegriff des Patentanspruches 1.

Es ist aus der DE-PS 33 39 500 ein beheizbares Lenkrad dieser Art bekannt geworden, bei dem das Heizelement von einer Heizfolie bzw. einem Heizdraht, die bzw. der innig um den Lenkradkranz gewickelt ist. Der Nachteil der bekannten Ausführungen liegt insbesondere darin, daß sich das Heizelement auf der Oberfläche der Ummantelung abzeichnet, was sich bei Verwendung von Widerstandsdraht als Heizelement ohne weiteres aus der Form des Drahtes und bei Verwendung von Folie Heizelement dadurch ergibt, daß aufgrund seiner geschlossenen Flächengestalt nicht faltenfrei um das kreisbogenförmig gekrümmte Lenkrad gewickelt werden kann. Dies gilt insbesondere für die Übergangsbereiche zwischen Lenkradkranz und Lenkradspeiche, in denen ein glattes Verlegen der Folie ausgeschlossen ist.

Der vorliegenden Erfindung liegt als Aufgabe die Schaffung eines beheizbaren Lenkrades der beschriebenen Art zugrunde, mit dessen Hilfe bei Erzielung einer gleichmäßigen Wärmeabgabe eine konturenfreie Oberfläche gewährleistet wird in dem Sinne, daß keine Abzeichnung der Konturen der Heizelemente an der Oberfläche eintritt. Diese Aufgabe wird mit einem Lenkrad mit den im Patentanspruch 1 wiedergegebenen Merkmalen gelöst. Durch die Verwendung eines - durch die Erstellung mittels Strick- oder Häkelmaschen gekennzeichneten - Kettengewirks als Heizelement wird erreicht, daß das Heizelement bei der Verlegung gleichmäßig und faltenfrei jeder Krümmung und sonstigen Unregelmäßigkeit des Flächenverlaufs zu folgen vermag. Es erlaubt somit auch eine absolut faltenfreie Verlegung in den vor allem kritischen Übergangsbereichen zwischen Lenkradkranz und Lenkradspeichen, in denen nicht nur eine Unterbrechung des regelmäßig gekrümmten Verlaufs des Lenkradkranzes durch Verzweigung sondern darüberhinaus auch eine Verdickung eintritt. Aufgrund dieser Eigenschaften des Kettengewirks wird auch weiterhin die Herstellung des Lenkrades bzw. Aufbringung des Heizelementes wesentlich vereinfacht insofern, als das Heizelement in gleicher Weise wie die Umhüllung als passformgerechter Zuschnitt vorgefertigt, durch Kleben oder in anderer geeigneter Weise mit der Umhüllung verbunden und danach die Heizeinlage zusammen mit der Umhüllung in an sich bekannter Weise auf das Lenkrad aufgebracht werden kann. Es kann somit das zeit- und kostenaufwendige Umhüllen des Lenkrades mit dem Heizelement entfallen und die Herstellung weitgehend rationalisiert werden.

Weitere Ausführungsformen und Vorteile ergeben sich aus der nachfolgenden Beschreibung, in der die Erfindung anhand der beiliegenden Zeichnung beispielsweise erläutert ist. Es zeigen
- Fig. 1: eine Teilschnittdarstellung eines Lenkrades gemäß Erfindung
- Fig. 2: einen Schnitt durch den Griffkranz des in Fig. 1 wiedergegebenen Lenkrades
- Fig. 3: einen Teilschnitt nach III - III durch Fig. 1
- Fig. 4: die Ansicht einer zur Montage auf einem Lenkrad vorbereiteten Umhüllung mit aufgenähter Heizeinlage
- Fig. 5: eine perspektivische Teilsprengdarstellung der in Fig. 3 wiedergegebenen Umhüllung
- Fig. 6 bis 8: verschiedene Vorformen einer Heizeinlage

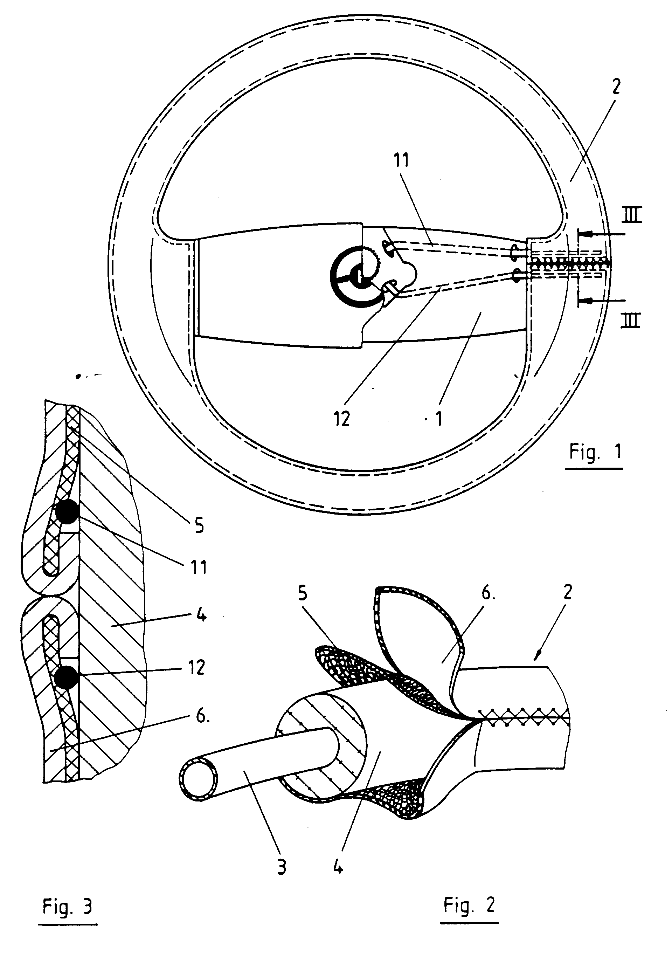

Das in den Fig 1 und 2 der Zeichnung wiedergegebene Lenkrad für Kraftfahrzeuge besteht aus der Lenkradspeiche 1 und dem Lenkradkranz 2, die aus einer Einlage 3, einem Träger 4, einer Heizeinlage 5 und einer beispielsweise aus Leder oder einem anderen ähnlichen Flächengebilde bestehenden Umhüllung 6. Die Heizeinlage 5 ist von einem Kettengewirke gebildet, das als ein aus einem Filament durch Strick- oder Häkelmaschen erstelltes Flächengebilde definiert ist. Aufgrund seiner Bildung aus Strick- bezw. Häkelmaschen ist das Kettengewirke nach allen Richtungen in weiten Grenzen sowohl ohne Zerstörung dehnbar als auch ohne Faltenbildung komprimierbar, so daß es jeder durch das Lenkrad bzw. dessen Umhüllung vorgegebenen Unregelmäßigkeit der Form selbst als einfacher Längenzuschnitt von Meterware ohne Schwierigkeit zu folgen vermag. Hierbei bleibt die elektrisch leitende Verbindung des Filamentes uneingeschränkt erhalten, so daß eine absolute Gleichmäßigkeit der Heizwirkung auf dem gesamten Lenkrad gewährleistet werden kann.

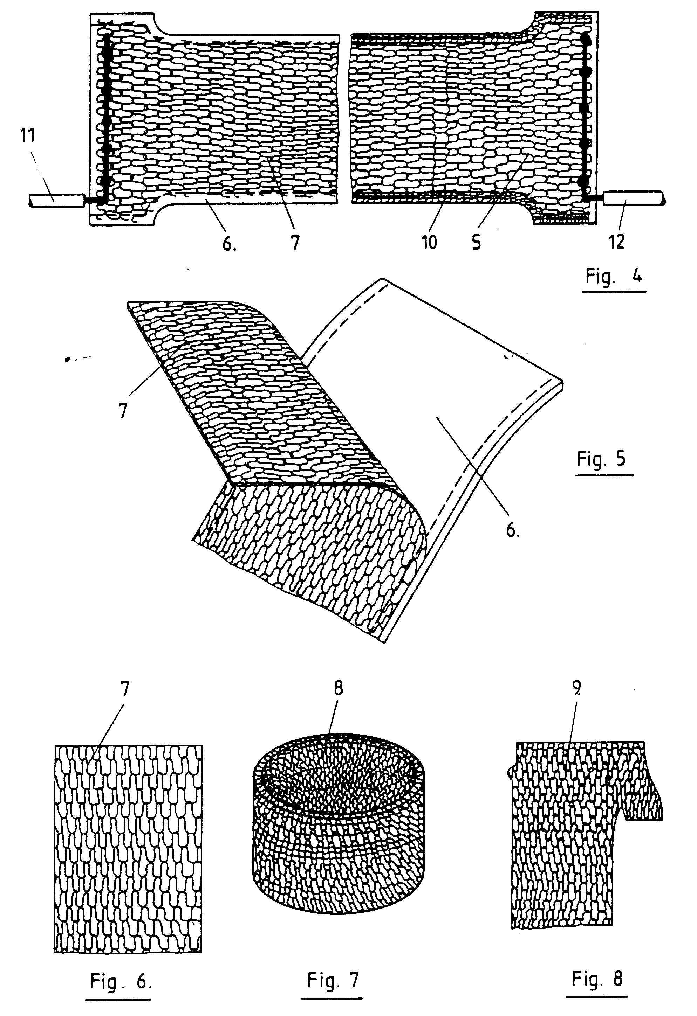

Die Heizeinlage kann - wie bereits dargestellt - entweder als Längenzuschnitt aus Bahnenware oder als eine der Umhüllung kongruente Vorform Verwendung finden, wobei die Vorform 7 entweder in der in Fig. 4, 5, 6 dargestellten Weise durch Ausstanzen aus Bahnenware oder - in der in Fig. 8 wiedergegebenen Weise durch direktes Wirken - Vorform 9 - in den der Kontur der Umhüllung entsprechenden Konturen hergestellt werden kann. In Einzelfällen Kann auch in der in Fig. 7 wiedergegebenen Weise eine schlauchartige Vorform 8 zur Anfertigung passgerechter Zuschnitte gewirkt werden.

Im Falle der in Fig. 4 der Zeichnung rechtsseitig wiedergegebenen Ausführungsform ist das Kettengewirke 5 an den Stoßkanten von einem Textilgewebe 10 eingefaßt, während im Falle der in den Fig. 1 und 2 wiedergegebenen Ausführungsform das Kettengewirke 5 von dem Zuschnitt der Umhüllung 6 saumartig eingefaßt ist.

Aus Fig. 4 ist erkennbar, daß das Kettengewirke 5 mit sich über seine Gesamtbreite erstreckenden Anschlüssen 11, 12 versehen ist, mit denen es an die - nicht dargestellte - Stromquelle angeschlossen werden kann. Es wird auf diese Weise eine ständige und nicht unterbrechbare Stromübertragung von der Stromquelle zur Heizeinlage auch im Falle des Bruches einer oder auch mehrerer Maschen des Kettengewebes gewährleistet.

Die Regelung der Heizeinrichtung kann in an sich bekannter Weise unter Temperaturbegrenzung mittels Thermostat oder PTC erfolgen, wobei zur Ein-bzw. Ausschaltung ein am Armaturenbrett oder an einer anderen geeigneten Stelle angeordneter Schalter vorgesehen sein kann. Es kann weiterhin in einer in der Zeichnung nicht wiedergegebenen Weise das Kettengewirke auf seiner Unterseite mit hervorspringenden Bereichen, beispielsweise Noppen, Haken, Krallen oder dergl., versehen sein, mit denen es sich auf dem darunterliegenden Trägermaterial 4 verkrallt, wodurch ein Verdrehen der Heizeinlage auf dem Lenkrad auch bei Kraftaufwendung verhindert ist.

Die Aufbringung der Heizeinlage bzw. Herstellung des Lenkrades kann in üblicher Weise durch nacheinander Auflegen und Befestigen der Heizeinlage und anschließendes Aufbringung der Umhüllung erfolgen. In besonders vorteilhafter Weise erfolgt die Herstellung jedoch derart, daß die Heizeinlage aus Kettengewirke als ein der Umhüllung paßgerecht entsprechender Zuschnitt oder als paßgerechte Vorform vorgefertigt und durch Kleben oder in anderer geeigneter Weise mit der Umhüllung verbunden und danach die Heizeinlage gemeinsam mit der Umhüllung in an sich bekannter Weise auf das Lenkrad aufgebracht wird.

## Patentansprüche

1. Beheizbares Lenkrad für Kraftfahrzeuge mit einer Umhüllung (6) aus Folie, Kunststoff, Textilien oder dergl., insbesondere Leder, und einer integrierten, an die elektrische Energiequelle anschließbaren Heizeinlage (5), dadurch gekennzeichnet, daß die Heizeinlage (5) von einem Kettengewirke gebildet ist.

2. Beheizbares Lenkrad nach Anspruch 1, dadurch gekennzeichnet, daß die Heizeinlage (5) eine der Form der Umhüllung (6) kongruente Form aufweist und auf den Zuschnitt der Umhüllung (6) aufgenäht ist.

3. Beheizbares Lenkrad nach Anspruch 1 oder 2, dadurch gekennzeichnet, daß das Kettengewirke an den Stoßkanten von einem Textilgewebe (10) eingefaßt ist.

4. Beheizbares Lenkrad nach einem der Ansprüche 2 oder 3, dadurch gekennzeichnet, daß das Kettengewirke von dem Zuschnitt der Umhüllung saumartig eingefaßt ist.

5. Beheizbares Lenkrad nach einem der Ansprüche 1 bis 4, dadurch gekennzeichnet, daß das Kettengewirke auf seiner Unterseite mit hervorspringenden Bereichen, beispielsweise Noppen, Haken, Krallen oder dergl., versehen ist, mit denen es sich auf dem darunterliegenden Trägermaterial verkrallt.

6. Beheizbares Lenkrad nach einem der Ansprüche 1 bis 5, dadurch gekennzeichnet, daß das Kettengewirke mittels sich über seine Gesamtbreite erstreckenden Anschlüssen (11, 12) mit der Stromquelle verbunden ist.

7. Beheizbares Lenkrad nach einem der Ansprüche 1 bis 6, dadurch gekennzeicnet, daß zur Regelung der Heizeinrichtung im Stromkreis ein Temperaturbegrenzer in Verbindung mit einem Thermostatregler oder PTC vorgesehen ist.

8. Verfahren zur Herstellung eines Beheizbares Lenkrades für Kraftfahrzeuge mit einer aus einem Flächengebilde, insbesondere Leder, zugeschnittenen Umhüllung und einer integrierten, an die elektrische Energiequelle anschließbaren Heizeinlage nach einem der Ansprüche 1 bis 7, dadurch gekennzeichnet, daß die von einem gewirkten, gestrickten oder gehäkelten Flächengebilde gebildete Heizeinlage passgerecht zur Umhüllung als Zuschnitt oder Vorform vorgefertigt und durch Kleben oder in anderer geeigneter Weise mit der Umhüllung verbunden und danach die Heizeinlage zusammen mit der Umhüllung in an sich bekannter Weise auf das Lenkrad aufgebracht wird.

9. Verfahren nach Anspruch 8, dadurch gekennzeichnet, daß der Zuschnitt bezw. die Vorform durch Ausstanzen aus Bahnenware hergestellt wird.

10. Verfahren nach Anspruch 8, dadurch gekennzeichnet, daß der Zuschnitt bezw. die Vorform durch direktes Wirken in den der Kontur der Umhüllung entsprechenden Konturen hergestellt wird.

## Claims

1. Heatable steering wheel for automotive vehicles, having a covering (6), which is formed from film, plastics material, textiles, or the like, more especially leather, and having a heating insert (5) incorporated therein, which is connectable to the source of electrical energy, characterised in that the heating insert (5) is formed from a chain-like mesh.

2. Heatable steering wheel according to claim 1, characterised in that the heating insert (5) has a configuration corresponding to the configuration of the covering (6) and is sewn onto the blank of the covering (6).

3. Heatable steering wheel according to claim 1 or 2, characterised in that the mesh is enclosed at the abutment edges by a textile fabric (10).

4. Heatable steering wheel according to one of claims 2 or 3, characterised in that the mesh is enclosed, in a seam-like manner, by the blank of the covering.

5. Heatable steering wheel according to one of claims 1 to 4, characterised in that the mesh is provided, on its underside, with protruding portions, for example knubs, hooks, claws or the like, by means of which it engages with the carrier material situated therebeneath.

6. Heatable steering wheel according to one of claims 1 to 5, characterised in that the mesh is connected to the source of current by means of terminals (11, 12), which extend over the entire width of said chain mesh.

7. Heatable steering wheel according to one of claims 1 to 6, characterised in that a temperature limiting device is provided in the circuit, in conjunction with a thermostat governor or PTC, in order to regulate the heating means.

8. Method of manufacturing a heatable steering wheel for automotive vehicles, having a covering, which has been cut to size from a flat-shaped structure, more especially leather, and having a heating insert incorporated therein, which is connectable to the source of electrical energy, according to one of claims 1 to 7, characterised in that the heating insert, which is formed from a woven, knitted or crocheted flat-shaped structure, is prefabricated as a blank or preform so as to correspond to the covering exactly and is connected to the covering by adhesion or by some other suitable manner, and then the heating insert is applied to the steering wheel, together with the covering, in a manner known per se.

9. Method according to claim 8, characterised in that the blank, or respectively the preform, is produced by being stamped out of a roll.

10. Method according to claim 8, characterised in that the blank, or respectively the preform, is produced by weaving directly in the configurations corresponding to the configuration of the covering.

## Revendications

1. Volant de direction chauffable pour véhicules automobiles, comportant une enveloppe (6) en feuille, en matière plastique, en matière textile ou similaires, en particulier en cuir, et une doublure chauffante intégrée (5), connectable à la source d'énergie électrique, caractérisé en ce que la doublure chauffante (5) est constituée par un tissu tricoté en chaîne.

2. Volant de direction chauffable selon la revendication 1, caractérisé en ce que la doublure chauffante (5) présente une forme qui coïncide avec la forme de l'enveloppe (6) et est cousue sur la pièce découpée destinée à former l'enveloppe (6).

3. Volant de direction chauffable selon la revendication 1 ou 2, caractérisé en ce que le tissu tricoté en chaîne est bordé par un tissu textile (10) sur les lisières.

4. Volant de direction chauffable selon la revendication 2 ou 3, caractérisé en ce que le tissu tricoté en chaîne est bordé à la manière d'un ourlet par la pièce découpée destinée à former l'enveloppe.

5. Volant de direction chauffable selon l'une quelconque des revendications 1 a 4, caractérisé en ce que le tissu tricoté en chaîne est muni, sur sa face inférieure, de parties saillantes, par exemple de boutons, de crochets, de griffes ou similaires, par lesquelles il s'accroche au matériau de support sous-jacent.

6. Volant de direction chauffable selon l'une quelconque des revendications 1 à 5, caractérisé en ce que le tissu tricoté en chaîne est relié à la source de courant par des connexions (11, 12) qui s'étendent sur toute sa largeur.

7. Volant de direction chauffable selon l'une quelconque des revendications 1 à 6, caractérisé en ce qu'il est prévu dans le circuit, pour le réglage du système de chauffage, un limiteur de température en combinaison avec un régulateur thermostatique ou une résistance à coefficient positif de température.

8. Procédé de fabrication d'un volant de direction chauffable pour véhicules automobiles, comportant une enveloppe découpée dans une matière en feuille, en particulier dans du cuir, et une doublure chauffante intégrée, connectable à une source d'énergie électrique, selon l'une quelconque des revendications 1 à 7, caractérisé en ce que la doublure chauffante, formée par une matière en feuille à mailles, tricotée ou faite au crochet, est préfabriquée sous forme de pièce découpée ou de préforme bien adaptée à l'enveloppe et est unie à 'enveloppe par collage ou d'une autre manière appropriée, après quoi la doublure chauffante est posée de façon connue en soi sur le volant de direction, en même temps que l'enveloppe.

9. Procédé selon la revendication 8, caractérisé en ce que la pièce découpée ou la préforme est fabriquée par découpage à la matrice à partir de tissu en nappe.

10. Procédé selon la revendication 8, caractérisé en ce que la pièce découpée ou la préforme est fabriquée par tricotage direct avec un contour qui correspond à celui de l'enveloppe.
